# EUROPÄISCHE PATENTSCHRIFT

(11) **EP 1 983 334 B1**
(45) Veröffentlichungstag und Bekanntmachung des Hinweises auf die Patenterteilung: **23.12.2009**
(21) Anmeldenummer: 07008058.5
(22) Anmeldetag: 20.04.2007
(51) Int. Cl.: G01N 21/94, G01N 21/958, G01V 8/10

(54) **Verfahren und Vorrichtung zur optischen Erfassung von Verschmutzungen**
Method and apparatus for optically detecting contamination
Procédé et dispositif pour la détection optique des contaminants

(43) Veröffentlichungstag der Anmeldung: 22.10.2008
(73) Patentinhaber: SICK AG, 79183 Waldkirch (DE)
(72) Erfinder: Mack, Stefan, Dr., 79108 Freiburg (DE)
(74) Vertreter: Ludewigt, Christoph

(56) Entgegenhaltungen:
- DE-A1- 10 139 514
- JP-A- 2001 111 989
- JP-A- 2003 315 256
- US-A1- 2003 201 380
- US-A1- 2007 030 378

## Beschreibung

Die Erfindung betrifft ein Verfahren zur optischen Erfassung einer Verschmutzung gemäß dem Oberbegriff des Patentanspruchs 1 sowie eine Vorrichtung zur optischen Erfassung einer Verschmutzung gemäß dem Oberbegriff des Patentanspruchs 14.

Zur optischen Erfassung von Strukturen, z.B. zur Überwachung von Gegenständen oder Raumzonen, werden in zunehmendem Umfang Sicherheits-Laserscanner durch Kamerasensoren ersetzt, die wesentlich kostengünstiger sind. Solche Kamerasensoren bilden die zu erfassende Struktur auf einem Bildaufnehmer, z.B. flächige, pixelbasierte CCD- oder CMOS-Sensoren ab.

Dabei ist als spezielle, der derzeit unveröffentlichten Patentanmeldung Nr. 10 2006 058 057.5 zu entnehmende Ausgestaltung solcher Kamerasensoren bekannt, ein optisches Element im Strahlengang vorzusehen, mittels dessen die Struktur in mindestens zwei voneinander getrennte Bereiche des Bildaufnehmers abgebildet wird.

Ein wesentlicher Aspekt bei der Bereitstellung konkurrenzfähiger Kamerasensoren liegt in der Ausgestaltung ihrer Optik. Die üblichen Laserscanner-Systeme überwachen in der Regel einen Winkelbereich von 180°; dementsprechend muss auch die Optik der Kamerasensoren zumindest in einer Richtung ebenfalls ein Feld von 180° abbilden.

Diese Anforderung kann beispielsweise durch Verwendung von Fisheye-Objektiven, die preiswert und in vielen Varianten verfügbar sind, erfüllt werden. Sie besitzen aufgrund kleiner Brennweiten und typischer Blendenzahlen von 2,5 eine sehr große Tiefenschärfe. Gleichzeitig geht mit dieser Objektivanordnung prinzipbedingt einher, dass die Eintrittspupillen (d.h. die von der Objektseite durch die Abbildungsoptik gesehenen Bilder der Aperturblende) verschiedener Bildpunkte stark variieren.

Die vorstehend beschriebenen notwendigen Eigenschaften des Objektivs führen dazu, dass Verschmutzungen auf der Frontscheibe, die sich wenige Millimeter vor dem Objektiv befinden, das Bild deutlich beeinflussen.

Damit stellt sich die Frage, wie es zu ermöglichen ist, dass Verschmutzungen als solche identifiziert und nicht als Schutzfeldverletzung fehlinterpretiert werden, was insbesondere im Zusammenhang mit den sicherheitsrelevanten Anwendungsfeldern der Kamerasensoren inakzeptabel wäre.

Ein Lösungsansatz für diese Problematik ist aus der DE 10 2004 020 998 A1 bekannt. In dieser Druckschrift wird eine Abbildungsoptik gelehrt, bei der die Eintrittspupille aus dem Inneren der Abbildungsoptik zur Objektseite hin verlegt ist. Damit wirkt eine singuläre Verschmutzung auf der vorderen objektseitigen Glasfläche nicht mehr nur auf einen räumlich eng begrenzten Bereich des Bildsensors, sondern dunkelt das aufgenommene Abbild insgesamt und einigermaßen gleichmäßig ab.

Gemäß der Lehre der DE 10 2004 020 998 A1 wird also die Vermeidung einer Fehldetektion mit einer empfindlichen Verschlechterung der optischen Qualität des Gesamtbildes erkauft, die äquivalent zu einer homogenen Verschmutzung wirkt. Gerade in einer staubbelasteten Umgebung, in der es zu häufigen Verschmutzungen der Frontscheibe kommt, führt die resultierende Reduktion der in den Bildaufnahmesensor eingetragenen Signalintensität schnell dazu, dass die Bildqualität, insbesondere der Bildkontrast des erhaltenen Bildes, nicht mehr ausreichend sind und somit trotz geringer und örtlich begrenzter Verschmutzung der Kamerasensor nicht mehr einsetzbar ist.

In der DE 101 39 514 A1 ist ein Transmissionsdetektor für einen Fensterkörper offenbart, der über eine Weitwinkellinse einen Bereich einer Windschutzscheibe im fokussierten Bereich scharf und in weiteren sogenannten Referenzabschnitten nur unscharf aufnimmt. Innerhalb des fokussierten Bereichs können Schmutzpartikel anhand der scharfen Abbildung erkannt und lokalisiert werden. Die Referenzabschnitte dienen der Detektion eines Abfalls des Kontrastspektrums über die Auflösung, da feine Details durch die unscharfe Abbildung stärker beeinträchtigt werden als grobe Bildmerkmale.

Die US 2003/0201380 A1 lehrt, ein optisches System mit zwei Matrixsensoren in der Windschutzscheibe eines Fahrzeugs anzuordnen, um dessen Verunreinigung zu erkennen. Dabei werden nach dem Stereoskopieprinzip nahe Objekte auf der Windschutzscheibe, also Verunreinigungen, von entfernteren Objekten unterschieden.

Aus der US 2007/0030378 A1 ist eine Bildaufnahmevorrichtung bekannt, welche Verunreinigungen erkennt, indem eine Aufnahme bei homogener Ausleuchtung des Aufnahmechips mit gespeicherten Referenzhelligkeiten verglichen werden. Pixel, in denen die Referenzhelligkeit nicht erreicht wird, sind entweder defekt, oder der Strahlengang zu ihnen ist verschmutzt. Die Vorrichtung kann sich die Position der betroffenen Pixel merken und später im Betrieb in aufgenommenen Bildern eine Korrektur vornehmen, bei welcher der Wert interpoliert wird, insbesondere anhand der Helligkeitswerte umgebender nicht defekter bzw. nicht von einer Verschmutzung betroffener Pixel.

Aufgabe der Erfindung ist es, ein Verfahren und eine Vorrichtung bereitzustellen, mittels derer eine Verschmutzung der Frontscheibe sicher erkannt wird und trotz Verschmutzung eine hohe Qualität vom Kamerasensor erhaltener Bilder sicherzustellen.

Diese Aufgabe wird erfindungsgemäß durch ein Verfahren gemäß den Merkmalen des Patentanspruchs 1 und eine Vorrichtung gemäß den Merkmalen des Patentanspruchs 12 gelöst.

Vorteilhafte Ausführungsformen der Erfindung sind in den jeweils rückbezogenen Unteransprüchen angegeben.

Der Erfindung liegt die Erkenntnis zugrunde, dass durch eine dem Objektiv vorgeschaltete zusätzliche Optik die optische Abbildung nicht nur derart beeinflusst werden kann, dass auf dem Bildaufnehmer mindestens zwei versetzte Subbilder desselben Objektstreifens entstehen, sondern auch bewirkt werden kann, dass die Eintrittspupillen bzw. Strahldurchstoßpunkte der Subbilder an unterschiedlichen räumlichen Stellen der Frontscheibe liegen. Frontscheibe im Sinne dieser Erfindung ist dabei das den Sensor zur Außenwelt hin abschließende lichtdurchlässige Element, welches, wie z.B. eine Linse, ggf. auch den Lichtweg zu beeinflussen vermag.

Als Resultat sind die erhaltenen Subbilder unterschiedlich, da die Abbildungsstrahlen durch unterschiedliche Bereiche der Frontscheibe und der Abbildungsoptik hindurchgetreten sind. Nur wenn das identische Verschmutzungsmuster auf den unterschiedlichen Bereichen der Frontscheibe vorliegt, werden die beiden Subbilder in gleicher Weise beeinflusst (z.B. abgeschattet). Dies ist aber bei einem zufallsbestimmten Verschmutzungsprozess sehr unwahrscheinlich.

In der Praxis kann daher das Auftreten identischer Subbilder als klarer Indikator für ein System ohne inhomogene Verschmutzung interpretiert werden.

Dabei ist ein Algorithmus vorgesehen, der es erlaubt, mittels der Auswerteeinheit das mit einem unverschmutzten System zu erhaltende Bild aus den beiden Subbildern zu rekonstruieren. Dazu wird das Gesamtbild in mehrere Segmente aufgeteilt, die in beiden Subbildern redundant vorhanden sind. Bei der Rekonstruktion des Gesamtbildes werden dann genau diejenigen Segmente verwendet, in denen keine Verschmutzung vorliegt. Das kleinstmögliche verwendbare Segment, das die schärfste Rekonstruktion ermöglicht, ist ein einzelnes Pixel.

Vorzugsweise ist dabei jedes der Subbilder ein Bild der gesamten Struktur, es können aber auch als Subbilder gleiche Teilbereiche einer größeren Struktur als Grundlage für die Analyse dienen.

Vorzugsweise wird durch einen Vergleich der beiden Subbilder miteinander festgestellt, ob eine inhomogene Verschmutzung vorliegt oder nicht.

Dieser Vergleich kann in besonders einfacher Weise durch Subtraktion geschehen.

Die zusätzliche Optik kann diffraktiv, refraktiv oder reflektiv arbeiten; die entsprechend ausgestalteten Ausführungsformen weisen also mindestens ein Gitter, mindestens ein Prisma oder mindestens eine zumindest partiell reflektierende Fläche auf.

In einer bevorzugten Ausführungsform ist die zusätzliche Optik in die Frontscheibe des Kamerasensors integriert, wodurch eine besonders kompakte Bauform erzielt wird.

Es hat sich gezeigt, dass das erfindungsgemäße Verfahren bzw. die erfindungsgemäße Vorrichtung es auch erlauben, eine homogene Verschmutzung der Frontscheibe nachzuweisen, wenn man die den Subbildern zuzuordnenden Bereiche der Frontscheibe mit einer unterschiedlichen Neigung zur optischen Achse oder unterschiedlichen Oberflächeneigenschaften versieht.

Im Falle einer unterschiedlichen Neigung der den Subbildern zuzuordnenden Bereiche der Frontscheibe zur jeweiligen optischen Achse ist bei einer homogenen Schmutzverteilung auf der Frontscheibe nämlich die effektive Weglänge, die ein Lichtstrahl durch diese Schicht zurückzulegen hat, unterschiedlich, so dass eine unterschiedliche Schwächung erfolgt. Über den Vergleich der Helligkeit beider Bilder bei bekanntem Winkel zur jeweiligen optischen Achse ist dann die Bestimmung des aktuellen Verschmutzungsgrades möglich.

Alternativ ist es aber auch möglich, die homogene Verschmutzung zu bestimmen, wenn beide Bereiche der Frontscheibe den gleichen Winkel zu der jeweiligen optischen Achse haben, und zwar entweder mittels einer unterschiedlichen räumlichen Orientierung der beiden Bereiche oder dadurch, dass man sie mit unterschiedlichen Oberflächeneigenschaften versieht. Im Falle der Variation der Oberflächeneigenschaften können z.B. die Paare hydrophil/hydrophob, antistatisch/nicht antistatisch, höhere Rauhigkeit/geringere Rauhigkeit oder beheizt/unbeheizt verwendet werden, wobei jeweils der eine der beiden Bereiche die erstgenannte und der zweite der beiden Bereiche die zweitgenannte Eigenschaft des Paares besitzt.

Durch die Variation der Oberflächeneigenschaften wird die Wahrscheinlichkeit zur Ablagerung einer homogenen Schmutzschicht auf den jeweiligen Bereichen der Frontscheibe variiert. Gleiches gilt bei einer Variation der räumlichen Orientierung, da durch die Schwerkraft eine Vorzugsrichtung für die Ablagerung von Schmutzpartikeln vorgegeben ist. Damit ist aus dem Vergleich von Subbildern, deren Eintrittspupille durch das zusätzliche optische Element auf die beiden verschiedenartigen Teilbereiche verschoben wurde, erneut die Bestimmung eines Verschmutzungsgrades möglich.

Der Bildaufnehmer kann vorteilhaft beispielsweise als CCD-Sensor oder CMOS-Sensor ausgebildet sein.

Im Folgenden wird die Erfindung anhand von in der Zeichnung dargestellten Ausführungsbeispielen näher erläutert. Es zeigt:
- Fig. 1:: schematisch einen verschmutzen Kamerasensor gemäß Stand der Technik und das mit ihm erhaltene Bild,
- Fig. 2:: schematisch eine Ausführungsform eines erfindungsgemäßen Kamerasensors und die mit ihm erhaltenen Subbilder,
- Fig. 3: schematisch eine um 90° aus der Papierebene rotierte Ansicht der in Figur 2 gezeigten erfindungsgemäßen Ausführungsform,
- Fig. 4: schematisch eine zur Detektion homogener Verschmutzungen geeignete Ausführungsform der Erfindung
- Fig. 5: schematisch eine alternative zur Detektion homogener Verschmutzungen geeignete Ausführungsform der Erfindung.

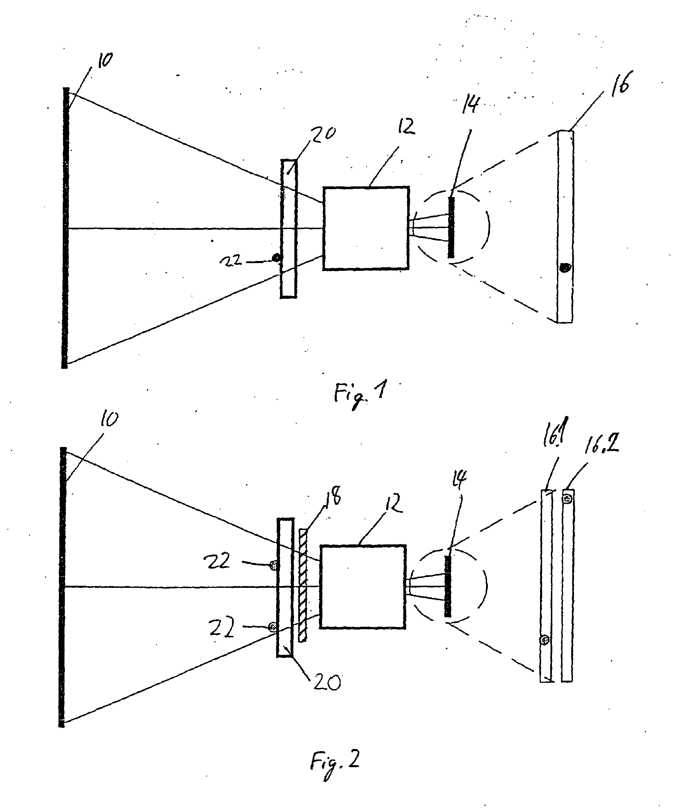

In Figur 1 ist zur Erläuterung ein Kamerasystem nach dem Stand der Technik zur Erfassung einer Struktur 10 dargestellt.

Die Struktur 10 ist schematisch als Balken dargestellt, kann jedoch irgendeine Struktur sein. Die Struktur 10 wird mit einem Kamerasystem erfasst, welches ein Objektiv 12 aufweist, das die Struktur 10 auf einen Bildaufnehmer 14 abbildet. Der Bildaufnehmer 14 ist beispielsweise ein CCD-Sensor mit einer quadratischen oder rechteckigen Matrix von Bildpunkten (Pixel). Die Struktur 10 wird auf dem Bildaufnehmer 14 als hier vergrößert dargestellte Abbildung 16 abgebildet, die der Struktur 10 entspricht. Im Allgemeinen wird die Abbildung 16 nur einen Teilbereich der Sensorfläche des Bildaufnehmers 14 einnehmen, so dass nur dieser Teilbereich des Bildaufnehmers 14 ausgenützt wird.

Das Kamerasystem nach dem Stand der Technik verfügt weiter über eine Frontscheibe 20. Auf der Frontscheibe 20 hat sich im Beispiel ein Schmutzpartikel 22 abgesetzt. Dementsprechend zeigt die Abbildung 16 nicht nur die Struktur 10, sondern auch den Schmutzpartikel 22.

Die Abbildungsoptik 12 kann gegebenenfalls so vergrößern oder verkleinern, dass die Abbildung 16 in ihrer Längserstreckung in der X-Achse die Abmessungen des Bildaufnehmers 14 in dieser X-Achse optimal ausnutzt.

In dem Ausführungsbeispiel der Figur 2 ist in den Abbildungsstrahlengang des Kamerasystems vor der Abbildungsoptik 12 ein zusätzliches optisches Element 18 eingesetzt. Das optische Element 18 dient einerseits dazu, die Abbildungsstrahlen in unterschiedliche Bereiche des Bildaufnehmers 14 abzulenken, so dass auf dem Bildaufnehmer 14 zwei oder mehr Subbilder 16.1, 16.2 entstehen und sorgt andererseits dafür, dass die Eintrittspupillen bzw. Strahldurchstoßpunkte der Subbilder 16.1, 16.2 an unterschiedlichen räumlichen Stellen der Frontscheibe 20 liegen.

Als Resultat sind die erhaltenen Subbilder 16.1 und 16.2 unterschiedlich, da die Abbildungsstrahlen durch unterschiedliche Bereiche der Frontscheibe 20 und der Abbildungsoptik 12 hindurchgetreten sind. Nur wenn das identische Verschmutzungsmuster auf den unterschiedlichen Bereichen der Frontscheibe vorliegt, werden die beiden Subbilder 16.1, 16.2 in gleicher Weise beeinflusst (z.B. abgeschattet). Dies ist aber bei einem zufallsbestimmten Verschmutzungsprozess sehr unwahrscheinlich.

Die Subbilder 16.1, 16.2 werden von dem Bildaufnehmer 14 erfasst und können in einer nachgeschalteten Bildauswertung als redundante Abbildungen der Struktur 10 verarbeitet werden. Zum Nachweis einer Verschmutzung ist es dann hinreichend festzustellen, dass die Subbilder sich unterscheiden, beispielsweise durch Subtraktion der Subbilder voneinander.

Erfindungsgemäß werden Bereiche, in denen eine Abschattung der einen, nicht aber der anderen Abbildung auftritt, durch Verwendung der Bildpunkte der jeweils abschattungsfreien Abbildung rekonstruiert. Selbst wenn im Bereich beider Eintrittspupillen bzw. Strahldurchstoßpunkte der Subbilder 16.1, 16.2 Schmutzpartikel 22 zu finden sind, ist damit eine klare Erkennung der Struktur 10 noch möglich. Dadurch ergibt sich eine wesentliche Erhöhung der Sicherheit der Erfassung der Struktur 10.

Sind die Subbilder 16.1 und 16.2 in den voneinander getrennten Bereichen um einen ganzzahligen Pixel-Abstand des Bildaufnehmers 14 voneinander getrennt, so ergeben sich in diesen voneinander getrennten Bereichen jeweils identische Abbildungen 16.1 und 16.2 der Struktur 10, wie dies für die Verwendung als redundante Abbildungen zweckmäßig ist.

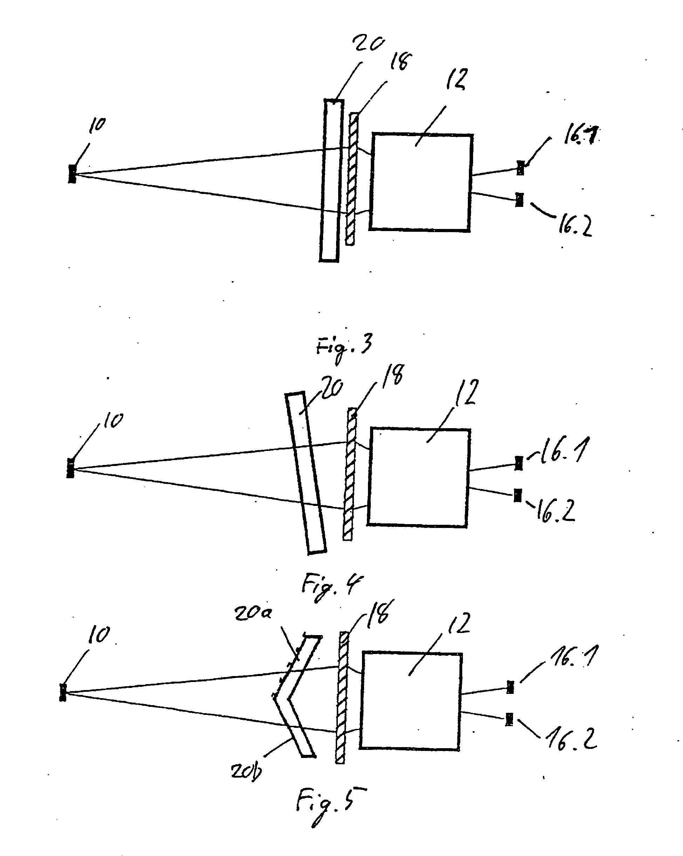

Figur 3 zeigt dieselbe Anordnung wie Figur 2, die allerdings um 90° aus der Papierebene heraus auf den Betrachter zu rotiert. Diese Darstellung verdeutlicht noch einmal, dass die beiden Subbilder gleichzeitig auf dem Bildaufnehmer 14 erzeugt werden. Dabei stellen die beiden in dieser Darstellung gezeigten Strahlen jeweils den Hauptstrahl der beiden Abbildungsvorgänge dar.

Eine weitere Ausführungsform der Erfindung, die auch die Detektion homogener Verschmutzungen erlaubt, ist in Figur 4 schematisch dargestellt. Das dort gezeigte Kamerasystem entspricht vom Aufbau her in wesentlichen Teilen dem in Figur 3 dargestellten. Der einzige Unterschied liegt darin, dass die Frontscheibe 20 so positioniert ist, dass sie unter einem unterschiedlichen Winkel zu den optischen Achsen der zu den jeweiligen Subbildern führenden optischen Abbildungen steht.

Bei einer homogenen Schmutzverteilung auf der Frontscheibe wird durch die unterschiedlichen Winkel zu den jeweiligen optischen Achsen die effektive Weglänge, die ein Lichtstrahl durch diese Schicht zurückzulegen hat, unterschiedlich, so dass eine unterschiedliche Schwächung erfolgt. Über den Vergleich der Helligkeit beider Bilder bei bekanntem Winkel zur jeweiligen optischen Achse ist dann die Bestimmung des aktuellen Verschmutzungsgrades möglich.

Figur 5 zeigt eine alternative Ausführungsform der Erfindung, die zur Detektion homogener Verschmutzungen geeignet ist. Die Perspektive entspricht wieder der der Figur 3. Dies gilt wie bereits im Fall der Figur 4 auch für alle Komponenten des Systems bis auf die Frontscheibe 20, die in diesem Fall in zwei Teilbereiche 20a und 20b unterteilt ist. Die Teilbereiche 20a und 20b unterscheiden sich hinsichtlich ihrer räumlichen Orientierung und/oder ihrer Oberflächeneigenschaften. Als variierende Oberflächeneigenschaften können z.B. die Paare hydrophil/hydrophob, antistatisch/nicht antistatisch, höhere Rauhigkeit/geringere Rauhigkeit oder beheizt/unbeheizt verwendet werden, wobei jeweils der eine der beiden Bereiche die erstgenannte und der zweite der beiden Bereiche die zweitgenannte Eigenschaft des Paares besitzt.

### Bezugszeichenliste

- 10: Struktur
- 12: Abbildungsoptik
- 14: Bildaufnehmer
- 16: Abbildung
- 16.1: Subbild
- 16.2: Subbild
- 18: optisches Element
- 20: Frontscheibe
- 20a: erster Teilbereich der Frontscheibe
- 20b: zweiter Teilbereich der Frontscheibe
- 22: Schmutzpartikel

## Patentansprüche

1. Verfahren zur optischen Erfassung einer Verschmutzung auf einer Frontscheibe (20) oder Frontlinse eines Kamerasensors, bei welchem eine Struktur (10) auf einen Bildaufnehmer (14) abgebildet wird, wobei ein im Abbildungsstrahlengang des Kamerasensors angeordnetes optisches Element (18) die Struktur (10) in wenigstens zwei voneinander getrennten und gegeneinander versetzten Bereichen des Bildaufnehmers (14) abbildet und den Abbildungsstrahlengang so beeinflusst, dass die Eintrittspupillen der so entstandenen Subbilder (16.1,16.2) unterschiedlich sind und die Subbilder (16.1,16.2) unterschiedliche Strahl-Durchstoßpunkte auf der Frontscheibe (20) oder Frontlinse aufweisen, **dadurch gekennzeichnet,**
**dass** in einer Auswerteeinheit mittels eines Algorithmus' ein rekonstruiertes Gesamtbild der Struktur (10) aus den Subbildern (16.1,16.2) erstellt wird und dass das Rekonstruieren des Gesamtbilds der Struktur (10) durch Ersetzen der Pixel oder Segmente, die abgeschatteten Bereichen des einen Subbildes (16.1,16.2) entsprechen, durch die entsprechenden nicht abgeschatteten Pixel oder Segmente des anderen Subbildes (16.2,16.1) erfolgt.

2. Verfahren nach Anspruch 1, **dadurch gekennzeichnet, dass** in den wenigsten zwei voneinander getrennten Bereichen des Bildaufnehmers (14) jeweils die gesamte Struktur (10) als Subbild (16.1,16.2) abgebildet wird.

3. Verfahren nach Anspruch 1 oder 2, **dadurch gekennzeichnet, dass** die Subbilder (16.1, 16.2) in den voneinander getrennten Bereichen des Bildaufnehmers (14) in einer Auswerteeinheit miteinander verglichen werden.

4. Verfahren nach Anspruch 3, **dadurch gekennzeichnet, dass** das Vergleichen der Subbilder (16.1,16.2) durch Subtraktion der Subbilder (16.1, 16.2) voneinander erfolgt.

5. Verfahren nach einem vorstehenden Anspruch, **dadurch gekennzeichnet, dass** das im Abbildungsstrahlengang angeordnete optische Element (18) refraktiv die Struktur (10) in mindestens zwei voneinander getrennten und gegeneinander versetzten Bereichen des Bildaufnehmers (14) abbildet.

6. Verfahren nach einem der Ansprüche 1 bis 4, **dadurch gekennzeichnet, dass** das im Abbildungsstrahlengang angeordnete optische Element (18) diffraktiv die Struktur (10) in mindestens zwei voneinander getrennten und gegeneinander versetzten Bereichen des Bildaufnehmers (14) abbildet.

7. Verfahren nach einem der Ansprüche 1 bis 4, **dadurch gekennzeichnet, dass** das im Abbildungsstrahlengang angeordnete optische Element (18) reflektiv die Struktur (10) in mindestens zwei voneinander getrennten und gegeneinander versetzten Bereichen des Bildaufnehmers (14) abbildet.

8. Verfahren nach einem vorstehenden Anspruch, **dadurch gekennzeichnet, dass** das optische Element (18) in die Frontscheibe (10) oder Frontlinse integriert ist.

9. Verfahren nach einem der Ansprüche 3 bis 8, **dadurch gekennzeichnet, dass** im Vergleichsschritt aus dem Vergleich aller einander entsprechenden Pixel der zu den voneinander getrennten und gegeneinander versetzten Bereiche des Bildaufnehmers (14) eine homogene Verschmutzung bestimmt wird.

10. Verfahren nach einem der Ansprüche 3 bis 9, **dadurch gekennzeichnet, dass** im Vergleichsschritt die optische Weglänge des Durchgangs durch die Frontscheibe (20) oder Frontlinse bei den Abbildungen in mindestens zwei voneinander getrennten und gegeneinander versetzten Bereichen des Bildaufnehmers (14), die bei Schrägstellung der Frontscheibe (20) oder Frontlinse auftreten kann, berücksichtigt wird.

11. Verfahren nach einem der Ansprüche 9 oder 10, **dadurch gekennzeichnet, dass** die Frontscheibe (20) oder Frontlinse in mindestens zwei Bereiche (20a, 20b) unterteilt wird, die unterschiedlich räumlich angeordnet werden und/oder denen unterschiedliche Oberflächeneigenschaften verliehen werden.

12. Vorrichtung, umfassend einen Kamerasensor mit einer Frontscheibe (20) oder einer Frontlinse, zur optischen Erfassung einer Verschmutzung auf der Frontscheibe (20) oder Frontlinse des Kamerasensors, die einen Bildaufnehmer (14) aufweist, auf welchem eine Struktur (10) abgebildet wird, wobei ein zur Abbildung der Struktur (10) in wenigstens zwei voneinander getrennte und gegeneinander versetzte Bereiche des Bildaufnehmers (14) und zur Erzielung unterschiedlicher Eintrittspupillen und unterschiedlicher Strahl-Durchstoßpunkte der so erzeugten Subbilder (16.1, 16.2) auf der Frontscheibe (20) oder Frontlinse ausgelegtes optisches Element (18) in dem Abbildungsstrahlengang des Kamerasensors angeordnet ist, **dadurch gekennzeichnet, dass** eine Auswertungseinrichtung vorgesehen ist, die dafür ausgebildet ist, mittels eines Algorithmus' ein rekonstruiertes Gesamtbild der Struktur (10) aus den Subbildern (16.1,16.2) zu erstellen, wobei das Rekonstruieren des Gesamtbilds der Struktur (10) durch Ersetzen der Pixel oder Segmente, die abgeschatteten Bereichen des einen Subbildes (16.1,16.2) entsprechen, durch die entsprechenden nicht abgeschatteten Pixel oder Segmente des anderen Subbildes (16.2,16.1) erfolgt.

13. Vorrichtung nach Anspruch 12, **dadurch gekennzeichnet, dass** das optische Element (18) in den wenigstens zwei Bereichen jeweils ein Subbild (16.1, 16.2) der gesamten Struktur (10) erzeugt.

14. Vorrichtung nach Anspruch 12 oder 13, **dadurch gekennzeichnet, dass** weiterhin die Auswerteeinrichtung zum Vergleich von Subbildern auf voneinander getrennten und gegeneinander versetzten Bereichen des Bildaufnehmers (14) vorgesehen ist.

15. Vorrichtung nach einem der Ansprüche 12 bis 14, **dadurch gekennzeichnet, dass** das optische Element (18) wenigstens ein optisches Gitter aufweist.

16. Vorrichtung nach einem der Ansprüche 12 bis 14, **dadurch gekennzeichnet, dass** das optische Element (18) wenigstens ein Prisma aufweist.

17. Vorrichtung nach einem der Ansprüche 12 bis 14, **dadurch gekennzeichnet, dass** das optische Element (18) wenigstens eine zumindest partiell reflektierende Fläche aufweist.

18. Vorrichtung nach einem der Ansprüche 12 bis 17, **dadurch gekennzeichnet, dass** das optische Element (18) in die Frontscheibe (20) oder Frontlinse integriert ist.

19. Vorrichtung nach einem der Ansprüche 12 bis 18, **dadurch gekennzeichnet, dass** die Frontscheibe (20) so angeordnet ist, dass unterschiedliche Winkel zu den optischen Achsen der die Subbilder (16.1, 16.2) erzeugenden Abbildungen bestehen.

20. Vorrichtung nach einem der Ansprüche 12 bis 19, **dadurch gekennzeichnet, dass** die Frontscheibe (20) in sich hinsichtlich ihrer räumlichen Anordnung und/oder hinsichtlich ihrer Oberflächeneigenschaften unterscheidende Bereiche (20a, 20b) unterteilt ist.

21. Vorrichtung nach einem der Ansprüche 12 bis 20, **dadurch gekennzeichnet, dass** der Bildaufnehmer (14) ein CCD-Sensor ist.

22. Vorrichtung nach einem der Ansprüche 12 bis 20, **dadurch gekennzeichnet, dass** der Bildaufnehmer (14) ein CMOS-Sensor ist.

## Claims

1. A method for the optical detection of contamination of a front screen (20) or of a front lens of a camera sensor, wherein a structure (10) is imaged onto an imager (14), wherein an optical element (18) arranged in the imaging beam path of the camera sensor images the structure (10) in at least two regions of the imager (14) separate from one another and offset with respect to one another and influences the imaging beam path such that the entry pupils of the sub-images (16.1, 16.2) thus created are different and the sub-images (16.1, 16.2) have different beam entry points on the front screen (20) or front lens, **characterised in that**
a reconstructed total image of the structure (10) is prepared from the sub-images (16.1, 16.2) by means of an algorithm in an evaluation unit; and
**in that** the reconstruction of the total image of the structure (10) takes place by replacement of the pixels or segments which correspond to obscured regions of the one sub-image (16.1, 16.2) with the corresponding non-obscured pixels or segments of the other sub-image (16.2, 16.1).

2. A method in accordance with claim 1, **characterised in that** in each case the total structure (10) is imaged as a sub-image (16.1, 16.2) in the at least two regions of the imager (14) separate from one another.

3. A method in accordance with claim 1 or claim 2, **characterised in that** the sub-images (16.1, 16.2) in the regions of the imager (14) separate from one another are compared with one another in an evaluation unit.

4. A method in accordance with claim 3, **characterised in that** the comparison of the sub-images (16.1, 16.2) takes place by subtraction of the sub-images (!6.1, 16.2) from one another.

5. A method in accordance with a preceding claim, **characterised in that** the optical element (18) arranged in the imaging beam path images the structure (10) refractively in at least two regions of the imager (14) separate from one another and offset with respect to one another.

6. A method in accordance with any one of the claims 1 to 4, **characterised in that** the optical element (18) arranged in the imaging beam path images the structure (10) diffractively in at least two regions of the imager (14) separate from one another and offset with respect to one another.

7. A method in accordance with any one of the claims 1 to 4, **characterised in that** the optical element (18) arranged in the imaging beam path images the structure (10) reflectively in at least two regions of the imager (14) separate from one another and offset with respect to one another.

8. A method in accordance with a preceding claim, **characterised in that** the optical element (18) is integrated into the front screen (10) or front lens.

9. A method in accordance with any one of the claims 3 to 8, **characterised in that,** in the comparison step, homogenous contamination is determined from the comparison of all mutually corresponding pixels of the regions of the imager (14) separate from one another and offset with respect to one another.

10. A method in accordance with any one of the claims 3 to 9, **characterised in that,** in the comparison step, the optical path length of the passage through the front screen (20) or front lens is taken into account in the images in at least two regions of the imager (14) separate from one another and offset with respect to one another which can occur on an oblique position of the front screen (20) or front lens.

11. A method in accordance with one of the claims 9 or 10, **characterised in that** the front screen (20) or front lens is divided into at least two regions (20a, 20b) which are arranged spatially differently and/or which have been given different surface properties.

12. An apparatus, including a camera sensor having a front screen (20) or a front lens, for the optical detection of contamination on the front screen (20) or front lens of the camera sensor which has an imager (14) on which a structure (10) is imaged, wherein an optical element (18) configured for the imaging of the structure (10) into at least two regions of the imager (14) separate from one another and offset with respect to one another and for the achieving of different entry pupils and different beam entry points of the thus generated sub-images (16.1, 16.2) on the front screen (20) or front lens is arranged in the imaging beam path of the camera sensor, **characterised in that** an evaluation device is provided which is made to prepare a reconstructed total image of the structure (10) from the sub-images (16.1, 16.2) by means of an algorithm, with the reconstruction of the total image of the structure (10) taking place by replacement of the pixels or segments which correspond to obscured regions of the one sub-image (16.1, 16.2) with the corresponding non-obscured pixels or segments of the other sub-image (16.2, 16.1).

13. An apparatus in accordance with claim 12, **characterised in that** the optical element (18) generates a respective sub-image (16.1, 16.2) of the total structure (10) in the at least two regions.

14. An apparatus in accordance with claim 12 or claim 13, **characterised in that** the evaluation device is furthermore provided for the comparison of sub-images on regions of the imager (14) separate from one another and offset with respect to one another.

15. An apparatus in accordance with any one of the claims 12 to 14,
**characterised in that** the optical element (18) has at least one optical grating.

16. An apparatus in accordance with any one of the claims 12 to 14, **characterised in that** the optical element (18) has at least one prism.

17. An apparatus in accordance with any one of the claims 12 to 14, **characterised in that** the optical element (18) has at least one partially reflecting surface.

18. An apparatus in accordance with any one of the claims 12 to 17, **characterised in that** the optical element (18) is integrated into the front screen (20) or front lens.

19. An apparatus in accordance with any one of the claims 12 to 18, **characterised in that** the front screen (20) is arranged such that there are different angles to the optical axes of the images generating the sub-images (16.1, 16.2).

20. An apparatus in accordance with any one of the claims 12 to 19, **characterised in that** the front screen (20) is divided into two regions (20a, 20b) differing with respect to their spatial arrangement and/or with respect to their surface properties.

21. An apparatus in accordance with any one of the claims 12 to 20, **characterised in that** the imager (14) is a CCD sensor.

22. An apparatus in accordance with any one of the claims 12 to 20, **characterised in that** the imager (14) is a CMOS sensor.

## Revendications

1. Procédé pour la détection optique d'une impureté sur un verre frontal (20) ou une lentille frontale d'un capteur de caméra, avec lequel une structure (10) est représentée sur un capteur d'image (14), un élément optique (18) disposé dans le trajet du rayon de représentation du capteur de caméra représentant la structure (10) dans au moins deux zones séparées l'une de l'autre et décalées l'une par rapport à l'autre du capteur d'image (14) et influençant le trajet du rayon de représentation de telle sorte que les pupilles d'entrée des images secondaires (16.1, 16.2) ainsi produites sont différentes et les images secondaires (16.1, 16.2) présentent des points de traversée du rayon différents sur le verre frontal (20) ou la lentille frontale, **caractérisé en ce qu'**une image totale reconstruite de la structure (10) est créée à partir des images secondaires (16.1, 16.2) dans une unité d'interprétation au moyen d'un algorithme et que la reconstruction de l'image totale de la structure (10) est réalisée en remplaçant les pixels ou les segments qui correspondent aux zones ombrées de l'une des images secondaires (16.1, 16.2) par les pixels ou les segments correspondants non ombrés de l'autre image secondaire (16.1, 16.2).

2. Procédé selon la revendication 1, **caractérisé en ce que** la structure (10) complète est à chaque fois représentée sous la forme d'une image secondaire (16.1, 16.2) dans au moins deux zones séparées l'une de l'autre du capteur d'image (14).

3. Procédé selon la revendication 1 ou 2, **caractérisé en ce que** les images secondaires (16.1, 16.2) dans les zones séparées l'une de l'autre du capteur d'image (14) sont comparées entre elles dans une unité d'interprétation.

4. Procédé selon la revendication 3, **caractérisé en ce que** la comparaison des images secondaires (16.1, 16.2) est réalisée par soustraction des images secondaires (16.1, 16.2) l'une de l'autre.

5. Procédé selon l'une des revendications précédentes, **caractérisé en ce que** l'élément optique (18) disposé dans le trajet du rayon de représentation représente la structure (10) de manière réfractive dans au moins deux zones séparées l'une de l'autre et décalées l'une par rapport à l'autre du capteur d'image (14).

6. Procédé selon l'une des revendications 1 à 4, **caractérisé en ce que** l'élément optique (18) disposé dans le trajet du rayon de représentation représente la structure (10) de manière diffractive dans au moins deux zones séparées l'une de l'autre et décalées l'une par rapport à l'autre du capteur d'image (14).

7. Procédé selon l'une des revendications 1 à 4, **caractérisé en ce que** l'élément optique (18) disposé dans le trajet du rayon de représentation représente la structure (10) de manière réflective dans au moins deux zones séparées l'une de l'autre et décalées l'une par rapport à l'autre du capteur d'image (14).

8. Procédé selon l'une des revendications précédentes, **caractérisé en ce que** l'élément optique (18) est intégré dans le verre frontal (20) ou la lentille frontale.

9. Procédé selon l'une des revendications 3 à 8, **caractérisé en ce que** dans l'étape de comparaison, une impureté homogène est déterminée à partir de la comparaison de tous les pixels correspondant les uns aux autres des zones séparées l'une de l'autre et décalées l'une par rapport à l'autre du capteur d'image (14).

10. Procédé selon l'une des revendications 3 à 9, **caractérisé en ce que** l'étape de comparaison tient compte, lors des représentations dans au moins deux zones séparées l'une de l'autre et décalées l'une par rapport à l'autre du capteur d'image (14), de la longueur du trajet optique du passage à travers le verre frontal (20) ou la lentille frontale qui peut se produire lorsque le verre frontal (20) ou la lentille frontale se trouve en position inclinée.

11. Procédé selon l'une des revendications 9 ou 10, **caractérisé en ce que** le verre frontal (20) ou la lentille frontale est divisé en au moins deux zones (20a, 20b) qui sont disposées différemment dans l'espace et/ou auxquelles sont attribuées des caractéristiques de surface différentes.

12. Dispositif, comprenant un capteur de caméra muni d'un verre frontal (20) ou d'une lentille frontale, pour la détection optique d'une impureté sur un verre frontal (20) ou une lentille frontale du capteur de caméra, lequel présente un capteur d'image (14) sur lequel est représentée une structure (10), un élément optique (18) étant disposé dans le trajet du rayon de représentation du capteur de caméra pour représenter la structure (10) dans au moins deux zones séparées l'une de l'autre et décalées l'une par rapport à l'autre du capteur d'image (14) et pour obtenir des pupilles d'entrée différentes et des points de traversée du rayon différents des images secondaires (16.1, 16.2) ainsi produites sur le verre frontal (20) ou la lentille frontale, **caractérisé en ce qu'**il est prévu un dispositif d'interprétation qui est configuré pour créer une image totale reconstruite de la structure (10) à partir des images secondaires (16.1, 16.2) au moyen d'un algorithme, la reconstruction de l'image totale de la structure (10) étant réalisée en remplaçant les pixels ou les segments qui correspondent aux zones ombrées de l'une des images secondaires (16.1, 16.2) par les pixels ou les segments correspondants non ombrés de l'autre image secondaire (16.1, 16.2).

13. Dispositif selon la revendication 12, **caractérisé en ce que** l'élément optique (18) génère à chaque fois une image secondaire (16.1, 16.2) de la structure totale (10) dans lesdites au moins deux zones.

14. Dispositif selon la revendication 12 ou 13, **caractérisé en ce que** l'unité d'interprétation est en plus prévue pour comparer les images secondaires des zones séparées l'une de l'autre et décalées l'une par rapport à l'autre du capteur d'image (14).

15. Dispositif selon l'une des revendications 12 à 14, **caractérisé en ce que** l'élément optique (18) présente au moins une grille optique.

16. Dispositif selon l'une des revendications 12 à 14, **caractérisé en ce que** l'élément optique (18) présente au moins un prisme.

17. Dispositif selon l'une des revendications 12 à 14, **caractérisé en ce que** l'élément optique (18) présente au moins une surface au moins partiellement réfléchissante.

18. Dispositif selon l'une des revendications 12 à 17, **caractérisé en ce que** l'élément optique (18) est intégré dans le verre frontal (20) ou la lentille frontale.

19. Dispositif selon l'une des revendications 12 à 18, **caractérisé en ce que** le verre frontal (20) est disposé de telle sorte qu'il se produit des angles différents par rapport aux axes optiques des représentations qui produisent les images secondaires (16.1, 16.2).

20. Dispositif selon l'une des revendications 12 à 19, **caractérisé en ce que** le verre frontal (20) est divisé en zone différentes (20a, 20b) du point de vue de leur disposition dans l'espace et/ou du point de vue de leurs caractéristiques de surface.

21. Dispositif selon l'une des revendications 12 à 20, **caractérisé en ce que** le capteur d'image (14) est un capteur CCD.

22. Dispositif selon l'une des revendications 12 à 20, **caractérisé en ce que** le capteur d'image (14) est un capteur CMOS.
